Europäisches Patentamt

European Patent Office

Office européen des brevets

(19)

(11) Numéro de publication: **0 048 666**
**B1**

(12) ## FASCICULE DE BREVET EUROPEEN

(45) Date de publication du fascicule du brevet:
**15.02.84**

(51) Int. Cl.³: **B 23 P 11/00**

(21) Numéro de dépôt: **81401438.7**

(22) Date de dépôt: **16.09.81**

(54) Procédé pour fixer un capot sur une semelle de fer à repasser à vapeur, ébauche de capot s'y rapportant et fer à repasser.

(30) Priorité: **24.09.80 FR 8020462**

(73) Titulaire: **SEB S.A. Société Anonyme française, F-21260 Selongey (FR)**

(72) Inventeur: **Schwob, Pierre, 55, avenue des Frères Lumière, F-69008 Lyon (FR)**

(74) Mandataire: **Bouju, André, 38 Avenue de la Grande Armée, F-75017 Paris (FR)**

(43) Date de publication de la demande:
**31.03.82 Bulletin 82/13**

(45) Mention de la délivrance du brevet:
**15.02.84 Bulletin 84/7**

(84) Etats contractants désignés:
**BE CH DE GB IT LI LU NL SE**

(56) Documents cités:
**DE - A - 2 553 750**
**GB - A - 1 010 457**
**GB - A - 1 321 200**
**US - A - 3 146 540**
**US - A - 4 189 821**

## Procédé pour fixer un capot sur une semelle de fer à repasser à vapeur, ébauche de capot s'y rapportant, et fer à repasser

La présente invention concerne un procédé pour fixer sur une semelle de fer à repasser à vapeur, un capot comportant un fond entouré d'une paroi latérale et un rebord périphérique dirigé vers l'extérieur et généralement parallèle au fond.

Les fers à repasser à vapeur comprennent généralement une chambre de vaporisation accompagnée de diverses chambres intermédiaires communiquant avec elle et servant à répartir la vapeur vers les divers orifices situés sous la semelle. Ces chambres sont séparées les unes des autres par des cloisons monobloc avec la semelle. Un capot à fond plat recouvre l'ensemble de la semelle et, en s'appuyant sur le sommet des cloisons, achève de définir les chambres.

La paroi latérale du capot demande à être fixée de façon étanche sur la semelle, de façon à éviter toute fuite indésirable de vapeur.

A titre d'exemple, le brevet britannique 1 321 200 décrit un procédé pour fixer un capot sur une semelle de fer à repasser comprenant les étapes suivantes:
a) on ménage dans la semelle une gorge pour recevoir un rebord périphérique ménagé sur la paroi latérale du capot, b) on met en place le capot dans cette gorge, c) on écrase le métal de la semelle le long de la gorge pour recouvrir au moins partiellement le rebord du capot.

Toutefois, comme indiqué à la page 2 lignes 28 à 36 de ce brevet, pour obtenir une étanchéité suffisante entre la semelle et le rebord du capot, il est nécessaire d'utiliser un joint d'étanchéité. La mise en place d'un tel joint est délicate, de sorte que la mise en œuvre du procédé n'est pas adaptée à une production industrielle en grande série. De plus, la fiabilité d'un tel joint n'est pas excellente, compte tenu des contraintes thermique et mécanique qu'il subit sous l'effet des variations rapides et fréquentes de la température de la semelle et du capot.

La présente invention a pour but de perfectionner le procédé décrit dans le brevet britannique précité en réalisant un procédé de fixation du capot sur la semelle d'un fer qui offre à la fois une excellente tenue mécanique et une étanchéité très sûre, tout en étant d'une réalisation économique.

Suivant l'invention, ce procédé est caractérisé en ce que la gorge est réalisée en forme de canal ayant un plan opposé à celui à partir duquel le métal est écrasé, ce plan servant d'appui à la paroi latérale du capot.

Ainsi, lorsque le métal de la semelle est écrasé le long de ce canal, l'extrémité du rebord du capot est poussée vers le plan du canal opposé à cette extrémité de sorte que la paroi latérale du capot prend appui contre ledit plan du canal. En même temps, l'écrasement du métal applique le rebord sur le fond du canal. La surface d'appui du rebord s'étend ainsi sur deux plans sensiblement perpendiculaires du canal, ce qui permet d'obtenir une excellente étanchéité sans qu'il soit nécessaire d'utiliser un joint d'étanchéité dont la mise en place est délicate et la tenue thermique et mécanique est précaire. En même temps qu'une excellente étanchéité, on obtient une fixation continue, très solide et fiable. D'autre part, aucun usinage n'est nécessaire sur la semelle, et le sertissage proprement dit peut facilement être exécuté sur des machines automatiques.

Suivant une réalisation préférée de l'invention, le procédé est caractérisé en ce que, lors de la fabrication du capot, on décale le rebord vers le fond du capot par un raccordement à courbures successives, la largeur développée du rebord étant supérieure à la largeur du canal et, entre les opérations b) et c) précitées, on presse le rebord dans le canal pour l'aplatir et supprimer le décalage précité.

L'aplanissement du rebord s'accompagne de son élargissement, ce qui lui permet de venir se coincer étroitement dans le canal et assure sa fixation provisoire avant l'opération de sertissage définitive. En outre, cet écrasement contribue à compenser les défauts de parallélisme entre les éléments assemblés.

Suivant une réalisation avantageuse de l'invention, avant de mettre en place le capot sur la semelle, on écrase le rebord en un certain nombre de zones localisées pour amincir le rebord en ces zones et provoquer son expansion vers la périphérie.

A la fabrication, un certain jeu (très faible) est prévu entre le rebord et les parois du canal. La réalisation des zones expansées permet d'obtenir autant de points de calage où ce jeu est supprimé, ce qui permet la manipulation immédiate de l'assemblage avant toute autre opération.

De préférence, on effectue l'opération de sertissage au moyen d'une molette mobile, et l'on donne au capot un contour composé d'arcs de cercles et de lignes droites. On fait passer successivement l'ensemble du capot et de la semelle sur des machines déplaçant chacune une molette suivant respectivement un arc de cercle ou une ligne droite.

Cette façon de procéder permet de donner aux machines une cinématique très simple.

Suivant un second aspect de l'invention, l'ébauche de capot pour fer à repasser à vapeur comprend un fond et une paroi latérale munie d'un rebord généralement parallèle au fond, et elle est caractérisée en ce que le rebord est raccordé à la paroi latérale par une courbure suivant un angle supérieur à 90° suivie d'une autre courbure en sens inverse pour décaler le plan du rebord vers le plan du fond.

Suivant un troisième aspect, l'invention vise un fer à repasser à vapeur, comprenant un capot fixé sur une semelle, ce capot comportant un fond entouré d'une paroi latérale et un rebord périphérique dirigé vers l'extérieur et généralement parallèle au fond, ce rebord étant serti dans une gorge ménagée sur la périphérie de la semelle, par écrasement du métal de la semelle le long de cette gorge. Suivant l'invention, cette gorge présente la forme d'un canal et la paroi latérale du capot est en appui contre le plan du canal opposé à celui à partir duquel le métal est écrasé.

D'autres particularités et avantages de l'invention ressortiront encore de la description détaillée qui va suivre.

Aux dessins annexés, donnés à titre d'exemple non limitatif:

– la fig. 1 est une vue en plan, avec arraché partiel, d'un assemblage conforme à l'invention d'un capot sur une semelle;
– la fig. 2 est une vue en élévation de cet assemblage;
– la fig. 3 est une vue en coupe transversale du capot seul;
– la fig. 4 est une vue en coupe, à grande échelle du rebord du capot;
– la fig. 5 est une vue en coupe, à grande échelle, suivant V–V de la fig. 1;
– la fig. 6 est une vue en plan du capot en cours de fabrication;
– la fig. 7 est une vue partielle en plan montrant l'insertion du rebord dans la gorge de la semelle;
– la fig. 8 est une vue en coupe suivant VII–VII de la fig. 7;
– les fig. 9 et 10 sont des vues en coupe montrant l'écrasement du métal de la semelle; et
– la fig. 11 est une vue schématique en plan montrant la cinématique des machines de sertissage.

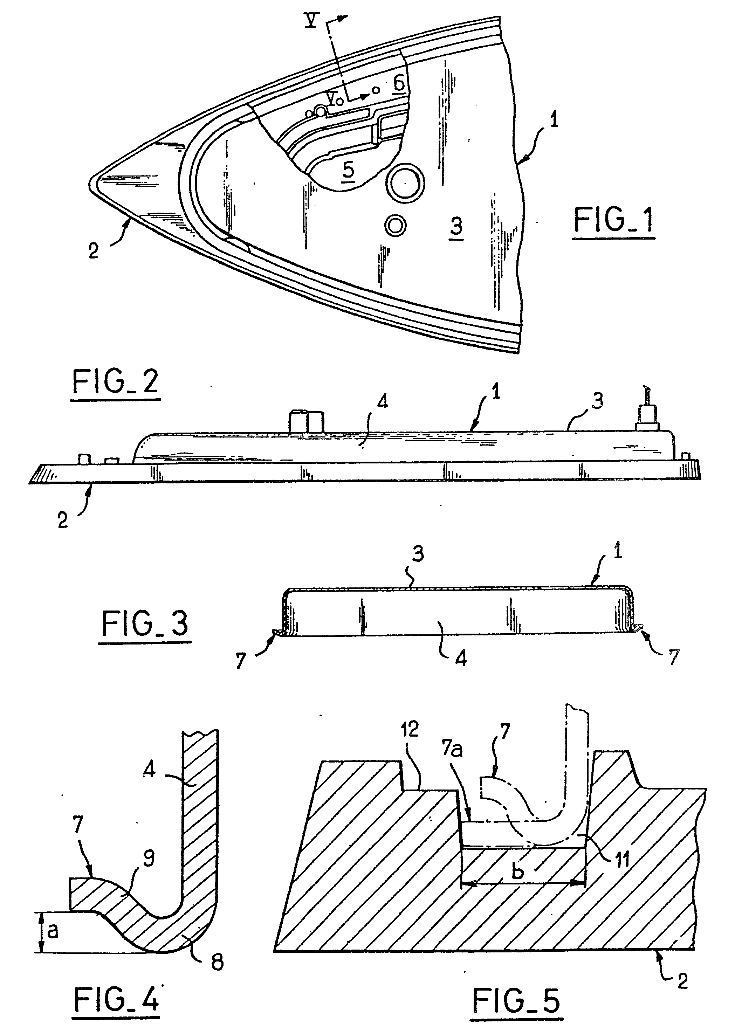

En référence aux fig. 1 à 3, un capot 1 en tôle est monté sur une semelle 2 de fer à repasser à vapeur de manière à compléter, par son fond 3 et sa paroi latérale 4, un certain nombre de chambres de vapeur telles que 5 et 6.

La paroi latérale 4 du capot présente, avant son assemblage sur la semelle, un rebord 7 généralement plan et parallèle au fond 3 (fig. 3 et 4). Ce rebord est raccordé à la paroi 4 par une courbure 8 suivant un angle supérieur à 90° suivie d'une courbure 9 en sens inverse (fig. 4), de sorte que le plan du rebord se trouve décalé d'une distance a vers le plan du fond 3 du capot. Dans l'exemple décrit, la distance a est de 1 mm.

La semelle 2 comporte une gorge périphérique 11 pratiquée suivant le contour du capot. La largeur b de la gorge 11 est telle que le rebord 7 puisse s'y insérer avec un faible jeu (fig. 5). Dans l'exemple décrit, ce jeu est de 0,2 mm. En outre, la largeur b est inférieure à la largeur dévelopée du rebord 7.

On notera que, pour plus de clarté, les différents jeux, ainsi que certaines dimensions, ont été fortement exagérés sur les dessins.

Enfin, une partie plane 12 est ménagée au bord de la gorge 11, sur le côté de la gorge voisine du bord extérieur de la semelle.

On va maintenant décrire le procédé d'assemblage du capot sur la semelle.

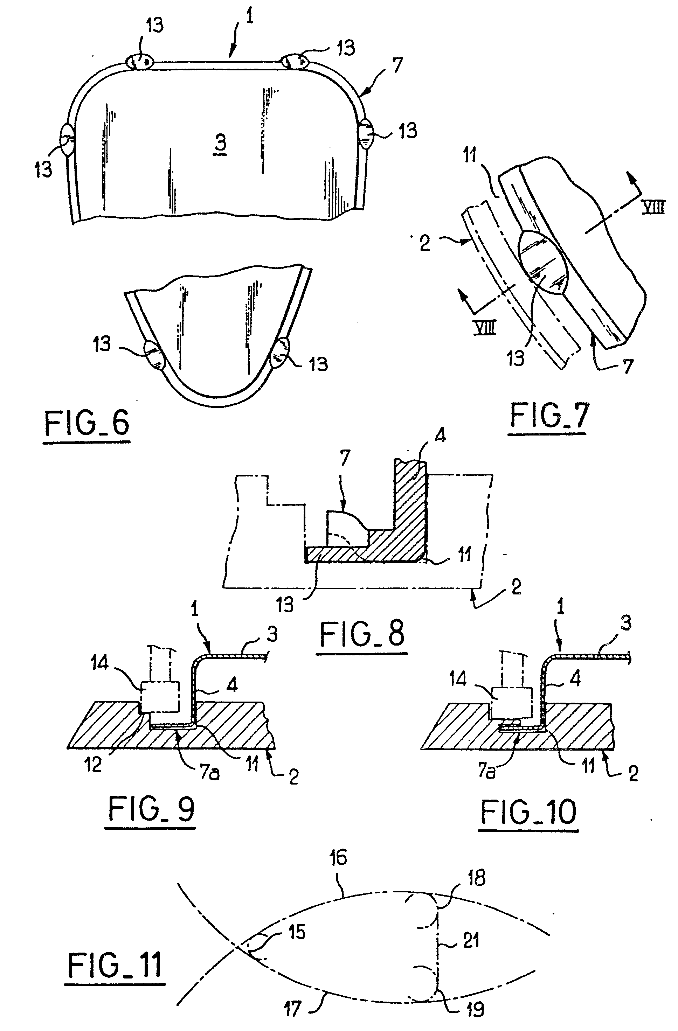

Dans une première opération, on écrase localement le rebord 7 en un certain nombre de zones 13 réparties sur le pourtour du capot (fig. 6). Dans l'exemple décrit, ces zones sont au nombre de six et l'expansion du métal qui résulte de cet écrasement augmente le périmètre du rebord 7 au point de rattraper le jeu prévu entre le rebord 7 et la gorge 11, et au-delà.

On emmanche alors le rebord dans la gorge (fig. 7 et 8) et les zones amincies 13, qui donnent lieu à un emmanchement à force, constituent autant de points d'ancrage qui assurent suffisamment la solidarité de l'ensemble pour permettre sa manipulation.

On écrase ensuite, au moyen d'une presse, sous une force de 95 000 DaN, le rebord 7 de manière à aplanir suivant 7a (fig. 5), en supprimant le décalage a. Cet aplanissement amène le rebord à occuper complètement la gorge 11, en supprimant les jeux résiduels et en compensant les écarts de parallélisme, en forçant même sur la paroi de la gorge.

On applique alors une molette 14 sur la partie plane 12, sous une force de 500 DaN (fig. 9) pour évaser le rebord extérieur de la gorge 11 (fig. 10), de manière à sertir le rebord 7a dans le métal de la semelle ainsi repoussé.

Afin de simplifier la cinématique de la molette, on donne au capot un contour constitué d'arcs de cercles 15, 16, 17, 18, 19 et d'une droite 21 (fig. 11). On porte l'assemblage sur six machines successives portant chacune une molette pour sertir successivement les portions de contour précitées.

La fixation obtenue est parfaitement étanche, sans utiliser aucun joint plastique. Elle est également mécaniquement très sûre. Enfin, sa réalisation, qui peut être entièrement automatisée, est très économique.

Bien entendu, l'invention n'est pas limitée à l'exemple décrit mais couvre toute variante mineure concernant aussi bien le procédé d'assemblage que les pièces à assembler. Notamment, le rebord du capot pourrait affecter, en coupe, toute forme ondulée autre que celle décrite, pourvu que sa largeur développée soit supérieure à la largeur du fond de la gorge de la semelle.

**Revendications**

1. Procédé pour fixer sur une semelle (2) de fer à repasser à vapeur un capot (1) comportant un fond (3) entouré d'une paroi latérale (4) et d'un rebord périphérique (7) dirigé vers l'extérieur et généralement parallèle au fond (3), ce procédé comprenant les opérations suivantes: a) on ménage dans la semelle (2) une gorge (11) pour recevoir le rebord (7) précité, b) on met en place le capot dans cette gorge (11), c) on écrase le métal de la semelle le long de la gorge (11) pour recouvrir au moins partiellement le rebord du capot, caractérisé en ce que la gorge est réalisée en forme de canal (11) ayant un plan opposé à celui à partir duquel le métal est écrasé, ce plan servant d'appui à la paroi latérale (4).

2. Procédé conforme à la revendication 1, caractérisé en ce que, lors de la fabrication du capot, on décale le rebord (7) vers le fond (3) du capot par un raccordement à courbures successives (8, 9), la largeur développée du rebord étant supérieure à la largeur (b) du canal (11), et en ce que, entre les opérations b) et c) précitées, on presse le rebord (7) dans le canal (11) pour l'aplatir et supprimer le décalage (a) précité.

3. Procédé conforme à l'une des revendications 1 ou 2, caractérisé en ce que, avant de mettre en place le capot sur la semelle, on écrase le rebord en un certain nombre de zones localisées (13) pour amincir le rebord (7) en ces zones et provoquer son expansion vers la périphérie.

4. Procédé conforme à l'une des revendications 1 à 3, caractérisé en ce qu'on effectue l'opération c) précitée au moyen d'au moins une molette mobile (14).

5. Procédé conforme à la revendication 4, caractérisé en ce qu'on donne au capot un contour composé d'arcs de cercles (15, 16, 17, 18) et de lignes droites (21), et en ce qu'on fait passer successivement l'ensemble du capot et de la semelle sur des machines déplaçant chacune une molette (14) suivant respectivement un arc de cercle ou une ligne droite.

6. Ebauche de capot pour fer à repasser à vapeur, pour appliquer un procédé conforme à l'une des revendications 2 à 5, comprenant un fond (3) et une paroi latérale (4) munie d'un rebord (7) généralement parallèle au fond, caractérisée en ce que le rebord présente, en coupe, un certain nombre de courbures (8, 9).

7. Ebauche de capot conforme à la revendication 6, caractérisée en ce que le rebord (7) est raccordé à la paroi latérale (4) par une courbure (8) suivant un angle supérieur à 90° suivie d'une autre courbure (9) en sens inverse pour décaler le plan du rebord (7) vers le plan du fond (3).

8. Fer à repasser à vapeur, comprenant un capot (1) fixé sur une semelle (2), ce capot comportant un fond (3) entouré d'une paroi latérale (4) et un rebord périphérique (7) dirigé vers l'extérieur et généralement parallèle au fond (3), ce rebord étant serti dans une gorge (11) ménagée sur la périphérie de la semelle, par écrasement du métal de la semelle le long de la gorge (11), caractérisé en ce que cette gorge présente la forme d'un canal (11) et en ce que la paroi latérale (4) du capot (1) est en appui contre le plan du canal (11) opposé à celui à partir duquel le métal est écrasé.

**Claims**

1. A method for attaching on a sole-plate (2) of a steam iron a cover (1) comprising a base wall (3) surrounded by a side wall (4) and a peripheral flange (7) outwardly directed and generally parallel to the base plate, said method comprising the following operations:
a) forming in said sole-plate (2) a channel (11) for receiving said flange (7), b) placing the cover in position in said channel (11), c) flattening the metal of the sole-plate along said channel (11) for covering at least partially said flange of said cover, characterised in that said channel is provided in the form of a groove (11) having a plane opposite to said plane from which the metal is flattened, said plane serving as a support for said lateral flange (4).

2. A method according to claim 1, characterised in that, at the time of manufacture of the cover, the flange (7) is upwardly displaced towards the flat top (3) of said cover by means of a junction formed by successive curved portions (8, 9), the developed width of the flange being greater than the width (b) of the channel (11) and in that, between the aforementioned operations b) and c), the flange (7) is pressed into the channel (11) in order to flatten said flange and thus to reduce the above mentioned upward displacement (a) to zero.

3. A method according to claim 1 or claim 2 wherein, before the cover is placed in position on the sole-plate, the flange of said cover is flattened in a predetermined number of localized zones (13) in order to reduce the thickness of said flange (7) in said zones while causing expansion of said flange towards the periphery.

4. A method according to claim 1, wherein the operation c) is carried out by means of at least one moving pressure roller (14).

5. A method according to claim 4, wherein the cover is given a contour composed of circular arcs (15, 16, 17, 18) and straight lines (21) and the assembly consisting of cover and sole-plate is passed successively through machines, each machine moving a pressure roller (14) respectively along a circular arc or along a straight line.

6. A blank for the cover of a steam iron, for applying a method according to any one of claims 2 to 5 comprising a flat top (3) and a side wall (4) provided with a flange (7) which is generally parallel to said flat top, wherein said flange is provided in cross-section with a predetermined number of curved portions (8, 9).

7. A cover blank according to claim 6, wherein the flange (7) is joined to the side wall (4) by means of a curved portion (8) bent-back at an angle higher than 90° followed by another curved-portion (9) bent-back in the opposite direction in order to displace the plane of said flange (7) towards the plane of said flat top (3).

8. Steam iron comprising a cover (1) attached on a sole-plate (2), said cover including a base wall (3) surrounded by a side wall (4) and a peripheral flange (7) outwardly directed and generally parallel to said base wall (3), said flange being set within a channel (11) provided on the periphery of said sole-plate by flattening the metal of said sole-plate a long said channel (11) characterised in that said channel is provided in the form of a grove (11), and in that said side wall (4) of said cover (1) is bearing against the plane of said channel (11) opposite to the plane from which the metal is flattened.

**Patentansprüche**

1. Verfahren zur Befestigung einer Haube (1), die einen Boden (3) aufweist, der von einer Seitenwand (4) und von einem zur Aussenseite hingerichteten und zu dem Boden (3) allgemein parallelen Umfangsrand umgeben ist, an der Fussplatte (2) eines Dampfbügeleisens, wobei dieses Verfahren die folgenden Arbeitsschritte umfasst: a) in der Fussplatte (2) wird eine Rinne (11) zur Aufnahme des genannten Randes (7) angebracht, b) die Haube wird in diese Rinne (11) eingesetzt, c) das Metall der Fussplatte wird entlang der Rinne (11) gequetscht, um wenigstens teilweise den Rand der Haube zu bedecken, dadurch gekennzeichnet, dass die Rinne in der Form eines Kanals (11) verwirklicht wird, der eine Ebene aufweist, die derjenigen gegenüberliegt, von welcher ausgehend das Metall gequetscht wurde, wobei diese Ebene als Abstützung für die Seitenwand (4) dient.

2. Verfahren nach Anspruch 1, dadurch gekennzeichnet, dass während der Herstellung der Haube der Rand (7) gegen den Boden (3) der Haube versetzt wird durch einen Anschluss mit aufeinanderfolgenden Krümmungen (8, 9), wobei die abgewickelte Breite des Randes grösser ist als die Breite (b) des Kanals (11), und das zwischen den vorgenannten Arbeitsschritten b) und c) der Rand (7) in den Kanal (11) eingedrückt wird, um die genannte Versetzung (a) abzuplatten und zu beseitigen.

3. Verfahren nach Anspruch 1 oder 2, dadurch gekennzeichnet, dass vor dem Aufsetzen der Haube auf die Fussplatte der Rand in einer bestimmten Anzahl von örtlichen Zonen (13) gequetscht wird, um den Rand (7) in diesen Zonen dünner zu machen und eine Verbreiterung derselben zum Umfang hin hervorzurufen.

4. Verfahren nach einem der Ansprüche 1 bis 3, dadurch gekennzeichnet, dass der vorgenannte Arbeitsschritt c) mittels wenigstens eines beweglichen Rädchens (14) durchgeführt wird.

5. Verfahren nach Anspruch 4, dadurch gekennzeichnet, dass der Haube eine aus Kreisbögen (15, 16, 17, 18) und aus geraden Linien (21) zusammengesetzte Kontur verliehen wird und dass nacheinander die aus der Haube und der Fussplatte gebildete Einheit über Maschinen geführt wird, die jeweils ein Rädchen (14) längs jeweils eines Kreisbogens oder einer geraden Linie bewegen.

6. Haubenrohling für ein Dampfbügeleisen, zur Anwendung eines Verfahrens nach einem der Ansprüche 2 bis 5, mit einem Boden (3) und einer Seitenwand (4), die mit einem zu dem Boden allgemein parallelen Rand (7) versehen ist, dadurch gekennzeichnet, dass der Rand im Schnitt eine bestimmte Anzahl von Krümmungen (8, 9) aufweist.

7. Haubenrohling nach Anspruch 6, dadurch gekennzeichnet, dass der Rand (7) an die Seitenwand (4) über eine Krümmung (8) mit einem 90° übersteigenden Winkel anschliesst, auf den eine weitere entgegengesetzte Krümmung (9) folgt, um die Ebene des Randes (7) zu der Ebene des Bodens (3) hin zu versetzen.

8. Dampfbügeleisen mit einer an einer Fussplatte (2) befestigten Haube (1), die einen Boden (3) aufweist, der von einer Seitenwand (4) und einem nach aussen gerichteten und allgemein zu dem Boden (3) parallelen Rand umgeben ist, welcher in eine Rinne (11) am Umfang der Fussplatte durch Quetschen des Metalles der Fussplatte längs der Rinne (11) eingefasst ist, dadurch gekennzeichnet, dass diese Rinne die Form eines Kanals (11) aufweist und dass die Seitenwand (4) der Haube (1) sich gegen diejenige Ebene des Kanals (11) abstützt, welche derjenigen gegenüberliegt, von welcher ausgehend das Metall gequetscht ist.

FIG_1

FIG_2

FIG_3

FIG_4

FIG_5

FIG_6

FIG_7

FIG_8

FIG_9

FIG_10

FIG_11